Europäisches Patentamt

**European Patent Office**  (11) Publication number:  **0 300 578**

**Office européen des brevets**  **A2**

(12) **EUROPEAN PATENT APPLICATION**

(21) Application number: **88201532.4**  (51) Int. Cl.⁴: **A01G 31/02 , A01G 9/02**

(22) Date of filing: **15.07.88**

(30) Priority: **17.07.87 NL 8701694**

(43) Date of publication of application:
**25.01.89 Bulletin 89/04**

(84) Designated Contracting States:
**BE DE FR GB NL**

(71) Applicant: **STAMICARBON B.V.**
**Mijnweg 1**
**NL-6167 AC Geleen(NL)**

(72) Inventor: **Van der Goorbergh, J.**
**de Asselen Kuil 15**
**NL-6161 RD Geleen(NL)**

(54) **Process for the production of a seed trough and a means thereto.**

(57) Process for the production of a seed trough starting from a plastic web with longitudinal grooves along which the web can be folded to form a trough. The surfaces of the web have different light-reflecting capacities. The web is folded in such a manner that the surface with the greatest light-reflecting capacity forms the outer face of the trough.

FIG. 1

EP 0 300 578 A2

## PROCESS FOR THE PRODUCTION OF A SEED TROUGH AND A MEANS THERETO

The invention relates to a process for the production of a dimensionally stable seed trough, which seed trough is obtained by folding a plastic web provided with longitudinal folding lines.

Such a process for the production of seed troughs, whether or not provided with perforated lids, is known from the Dutch patent application 8303999.

The inner and outer faces of the troughs obtained according to the known process reflect the light equally because they are produced from plastic webs manufactured from natural plastic or from a plastic containing one pigment. The disadvantages of this are, on the one hand, that the available light is utilized less effectively for the green plant parts and, on the other, that the root growth is adversely affected. For instance, black seed troughs spaced some distance apart will reflect much less of the light falling on their outer faces than white seed troughs. Since part of the reflected light becomes available for the green plant parts, white seed troughs are preferable from this point of view. However, black seed troughs present the advantage that light falling on the inner face of the troughs is not reflected to the root system within the troughs. This root system is contained in a nursing medium that may consist of water alone or of a different medium, such as a package of rock wool with some space between the rock wool and the wall of the trough. Also into such a rock wool package, light can penetrate to a certain depth. From the view-point of root growth, it is preferable to use black seed troughs, because then less light can reach the root system.

The aim of the invention is to provide a process for the production of seed troughs that eliminates the disadvantages of the known seed troughs to a great extent while maintaining the advantages.

This is achieved by folding the seed troughs from a web consisting substantially of plastic, one surface of which has a greater light-reflecting capacity than the other, and by folding the web in such a manner that the surface with the greatest light-reflecting capacity forms the outer face of the finished seed trough.

A seed trough obtained according to this process reflects the light falling on the outer face of the trough excellently, so that part of this light becomes available for the green plant parts, and reduces the penetration of the nursing medium by the light that is reflected from the inner face of the seed trough, as a result of which the root growth is less adversely affected.

If the trough is provided with a perforated lid, this lid must also be positioned in such a manner that the side with the greatest light-reflecting capacity forms the outer face.

The difference in light-reflecting capacity between the surfaces of the web can be obtained by coextruding two plastics of different colours, black and white being preferred.

Another way of obtaining a difference in light-reflecting capacity may be providing a black plastic web with a coating or a film with a greater light-reflecting capacity than the black plastic web itself or providing one surface of a light-coloured plastic web with, for instance, a black coating or a black film. The coating may be a paint coating.

Yet another way of obtaining a difference in light-reflecting capacity may be coating, for instance, a black plastic web with aluminium foil.

Films may be applied to the plastic web by lamination.

The plastic the web is made of may be high-density polyethylene with a density of more than 0.94, polypropylene or an ethylene propylene copolymer or mixtures of these (co)polymers. If a film is applied, this may consist of the same or (a) different plastic(s).

A film may be applied with advantage by using a film laminate consisting of a layer of, for example, white coloured low-density polyethylene and a layer of ethylene and vinyl acetate copolymer (EVA) incorporating more than 15 wt%, preferable more than 20 wt%, vinyl acetate. The EVA side of this film is applied to the plastic web with advantage immediately after the web, which preferably consists of polypropylene or a copolymer thereof, has been pro-duced, while it is still hot, after which the folding grooves can be applied. It is also possible to apply the grooves and laminate the film at the same time.

Metallization is another possibility of giving one surface of a plastic web a greater light-reflecting capacity than the other.

The invention will be further elucidated in the following with the aid of an example embodiment as shown in the drawing.

In the drawing:

Fig. 1: is a cross section of a seed trough according to the invention and

Fig. 2: is a cross section of a plastic web according to the invention for the production of a trough according to Fig. 1.

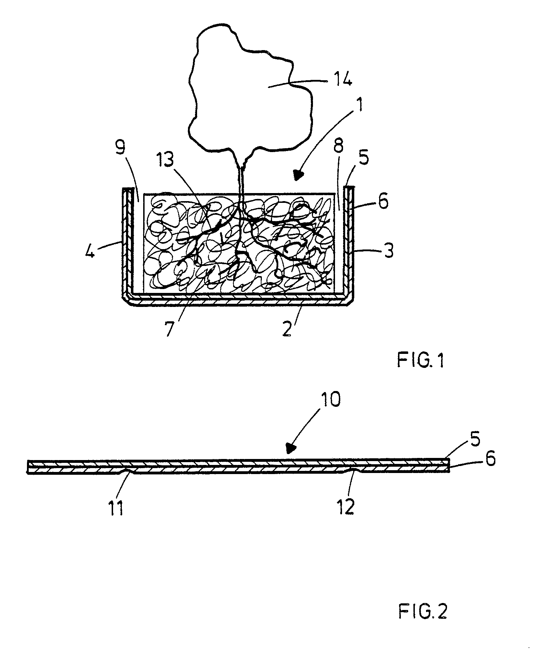

The seed trough referred to by the general reference number 1 in Fig. 1 has a bottom 2 and walls 3 and 4. The bottom 2 and the walls 3 and 4 are composed of two layers 5 and 6, whose surfaces have different light-reflecting capacities. Layers 5 and 6 consist of an ethylene/propylene copolymer and are coloured black and white, respectively.

The seed trough contains a nursing medium 7 consisting of a package of rock wool which, as usual, leaves spaces 8 and 9 between itself and the walls 3 and 4.

The seed trough 1 is obtained by folding a plastic web 10 consisting of two layers 5 and 6 of ethylene/propylene copolymer, see Fig. 2, layer 5 being black and layer 6 white. The plastic web 10 has two grooves 11 and 12 along which the web 10 can be folded to form the seed trough as shown in Fig. 1.

Light falling on layer 6, which forms the outer face of the trough 1, is reflected and becomes at least partly available to the green parts of plants cultivated in the seed troughs. Light falling in spaces 8 and 9 on layer 5, which forms the inner face of the seed trough, is largely absorbed by this layer, which means that it is not refected to the nursing medium 7. This presents the advantage that less light penetrates the nursing medium and that, consequently, the root growth 13 of the plant 14 is stimulated.

## Claims

1. Process for the production of a dimensionally stable seed trough, which seed trough is obtained by folding a plastic web provided with longitudinal folding lines, such as grooves, characterized in that the seed trough is folded from a web which consists substantially of plastic and of which one surface has a greater light-reflecting capacity than the other and that the web is folded in such a manner that the surface with the greatest light-reflecting capacity forms the outer face of the finished seed trough.

2. Plastic web suitable for the production of a seed trough according to claim 1, characterized in that the web consists of two differently coloured layers of plastic.

3. Plastic web according to claim 2, characterized in that the web is manufactured by coextruding two layers of plastic.

4. Plastic web according to claim 2, characterized in that the web is manufactured by laminating two layers of plastic.

5. Plastic web according to any one of claims 2-4, characterized in that one layer consists of black plastic and the other of white plastic.

6. Plastic web suitable for the production of a seed trough according to claim 1, characterized in that the web consists of a layer of black plastic, one side of which is provided with a metal coating which has a greater light-reflecting capacity than the layer of black plastic.

7. Plastic web according to claim 6, characterized in that the metal coating is an aluminium foil.

8. Plastic web according to claim 6, characterized in that the metal coating is obtained by metallization.

9. Plastic web suitable for the production of a seed trough according to claim 1, characterized in that one of the surfaces of a plastic layer has a coating with a greater or smaller light-reflecting capacity than that of the plastic layer.

10. Plastic web suitable for the production of a seed trough according to claim 1, characterized in that the plastic web is obtained by laminating a relatively thick base layer consisting of polypropylene or a copolymer of propylene - which layer serves to provide the dimensional stability of the trough - and a film consisting of a layer of low-density polyethylene provided with an adhesive coating of ethylene vinyl acetate (EVA) incorporating more than 15 wt%, preferably more than 20 wt%, vinyl acetate.

FIG. 1

FIG. 2

1/1

5869